# EUROPEAN PATENT SPECIFICATION

(11) **EP 0 462 750 B1**
(45) Date of publication and mention of the grant of the patent: **10.09.1997**
(21) Application number: 91305308.8
(22) Date of filing: 12.06.1991
(51) Int. Cl.: H04N 9/31

(54) **Projection-type television display**
Projektionsfernsehbildanzeigevorrichtung
Appareil d'affichage d'image de télévision par projection

(30) Priority: 19.06.1990 JP 160527/90
(43) Date of publication of application: 27.12.1991
(73) Proprietor: MATSUSHITA ELECTRIC INDUSTRIAL CO., LTD., Kadoma-shi, Osaka-fu, 571 (JP)
(72) Inventor: Matsumura, Ryoji, Ikoma-gun, Nara-ken (JP); Minami, Seiji, Amagasaki-shi, Hyogo-ken (JP); Mitani, Katsuaki, Ibaraki-shi, Osaka (JP); Matsuda, Isao, Hirakata-shi, Osaka (JP)
(74) Representative: Senior, Alan Murray

(56) References cited:
- EP-A- 0 445 513
- US-A- 4 753 519
- US-A- 4 987 483
- US-A- 5 010 396
- PATENT ABSTRACTS OF JAPAN vol. 12, no. 288 (P-741)8 August 1988 & JP-A-63 065 401
- PATENT ABSTRACTS OF JAPAN vol. 9, no. 159 (E-326)(1882) 4 July 1985 & JP-A- 60 035 892

## Description

This invention relates to a projection-type television display.

Some projection-type television displays include red, green, and blue segments which produce red, green, and blue component images projected onto a large viewing screen. The red, green, and blue component images are combined into a composite color image on the viewing screen. Each of the red, green, and blue segments has a cathode-ray tube (CRT) and an optical projection system.

In general optical projection systems, a projected image on a viewing screen tends to be contaminated by color fringes which result from chromatic aberration of lenses.

Japanese published unexamined patent application JP-A-62262819 discloses an optical projection system for use with a television CRT (cathode-ray tube) display. Japanese patent application JP-A-62262819 uses the fact that color fringes can be decreased as light is made monochromatic. The prior art optical projection system of Japanese patent application JP-A-62262819 includes an optical filter disposed frontward or rearward of a lens assembly or between lenses to suppresses an adverse effect of chromatic aberration of the lenses. This optical filter is composed of a colored member or a film. In addition, the optical filter may be formed on a lens.

In general, the chromaticity point of the light emitted from green light emitting CRTs deviates from the chromaticity point of the standard television green color.

Japanese published unexamined patent application JP-A-1254087 discloses a projection-type television display which features a filter disposed in a green projection lens unit. This filter has a light-wavelength-dependent reflectivity for reflecting and cutting off unnecessary components of light emitted from a green light emitting CRT. The unnecessary components of the light cause the green chromaticity point to deviate from the standard point. Specifically, the filter has high reflectivities for light of wavelengths shorter than 520 nm and longer than 570 nm, and low reflectivities for light of other wavelengths. In the prior art projection-type television display of Japanese patent application JP-A-1254087, the reflected light components tend to be returned to the green light emitting CRT so that the contrast at the light emitting surface of the CRT may be significantly dropped. Furthermore, in some cases, even necessary components of the light are appreciably reflected by the filter so that an acceptable correction of the green chromaticity point can not be attained.

It is an aim of this invention to provide an improved projection-type television display.

According to the present invention there is provided a projection-type television display comprising:
means for generating a red image;
means for generating a green image;
means for generating a blue image;
a common screen;
a first projection lens unit for projecting the generated red image onto the screen;
a second projection lens unit for projecting the generated green image onto the screen; and
a third projection lens unit for projecting the generated blue image onto the screen; characterised in that said second lens unit comprises first, second, third, fourth and fifth lenses, said first lens being a plastic lens containing a colouring material having a high pass filtering effect such that it transmits light having a wavelength shorter than 570 nm and absorbs light having a wavelength longer than 570 nm, and said fifth lens being a plastic lens containing a colouring material having a low pass filtering effect, such that it transmits light having a wavelength longer than 520 nm and absorbs light having a wavelength shorter than 520 nm.

The present invention will be further described hereinafter with reference to the following description of exemplary embodiments and the accompanying drawings, in which:

Fig. 1 is a perspective diagram of a projection-type television display to which this invention may be applied.

Fig. 2 is a sectional view of the red projection lens unit of Fig. 1.

Fig. 3 is a diagram showing a wavelength spectrum of light emitted from the red CRT, a wavelength spectrum of light output from the colored lens in the red projection lens unit, and a wavelength-domain transmissivity of the colored lens in the red projection lens unit.

Fig. 4 is a diagram showing a wavelength spectrum of light emitted from the green CRT, a wavelength spectrum of light output from the colored lens in the green projection lens unit, and a wavelength-domain transmissivity of the colored lens in the green projection lens unit in the embodiment of this invention.

Fig. 5 is a sectional view of a red projection lens unit in another display to which this invention may be applied.

Fig. 6 is a diagram showing a wavelength spectrum of light emitted from the green CRT, a wavelength spectrum of light output from the colored lens in the green projection lens unit, and a wavelength-domain transmissivity of the colored lens in the green projection lens unit in the embodiment of this invention.

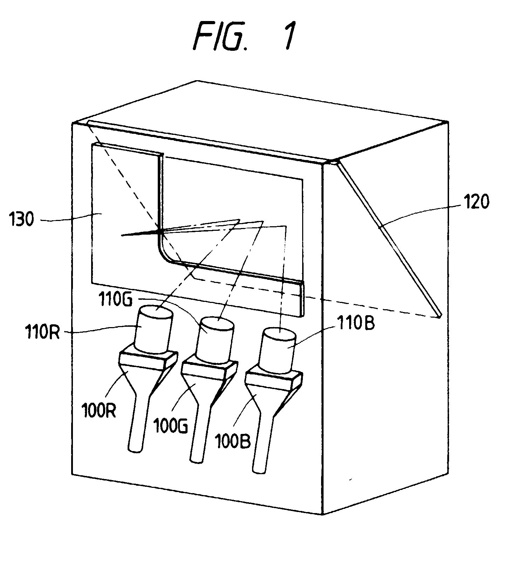

With reference to Fig. 1, a projection-type television display includes CRTs 100R, 100G, and 100B for generating red, green, and blue component images respectively. After being emitted from the CRTs 100R, 100G, and 100B, beams of light which represent the red, green, and blue component images are incident to projection lens units 110R, 110G, and 110B respectively. The beams of light pass through the projection lens units 110R, 110G, and 110B, and are then reflected by a mirror 120 before reaching a large viewing screen 130. The red, green, and blue component images generated by the CRTs 100R, 100G, and 100B are projected onto the large viewing screen 130 by the operation of the projection lens units 110R, 110G, and 110B and the mirror 120. On the viewing screen 130, the projected red, green, and blue component images are combined into a composite color image.

The projection lens units 110R, 110G, and 110B have similar internal arrangements. Only the internal design of the red lens unit 110R will be explained in detail. It should be noted that the projection lens units 110R, 110G, and 110B are different in filtering characteristics as will be explained later.

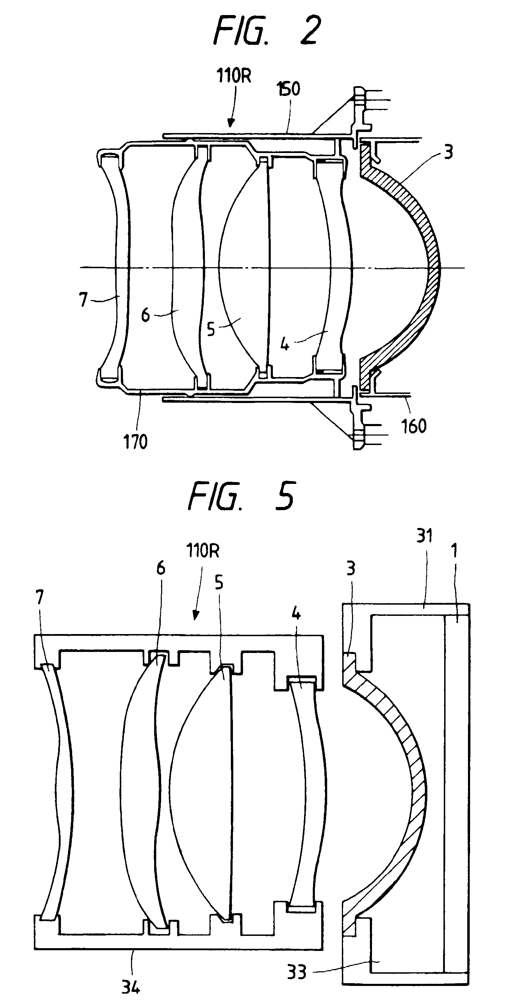

As shown in Fig. 2, the red lens unit 110R includes a set of successively-arranged first, second, third, fourth and fifth lenses 3, 4, 5, 6, and 7. The red lens unit 110R includes a cylindrical casing 150. The first lens 3 is held within a cylindrical holder 160 which is supported by the casing 150. The second, third, fourth, and fifth lenses 4, 5, 6, and 7 are held within a cylindrical holder 170 which is supported by the casing 150 and which extends into the casing 150. The first lens 3 follows the red CRT 100R (see Fig. 1) in the direction of the travel of the light emitted from the red CRT 100R. The fifth lens 7 is followed by the mirror 120 in the direction of the travel of the light emitted from the red CRT 100R.

In the red lens unit 110R, the first lens 3 is composed of a lens additionally having a filtering function while the second, third, fourth, and fifth lenses 4, 5, 6, and 7 are composed of non-filtering lenses. Specifically, the first lens 3 is designed so as to have characteristics of a low pass filter in addition to intrinsic lens characteristics. For example, the first lens 3 is composed of a colored plastic lens made of methacrylic resin containing coloring material. Parapet HR-11105L produced by Kuraray Company Limited can be used for the material constituting the first lens 3.

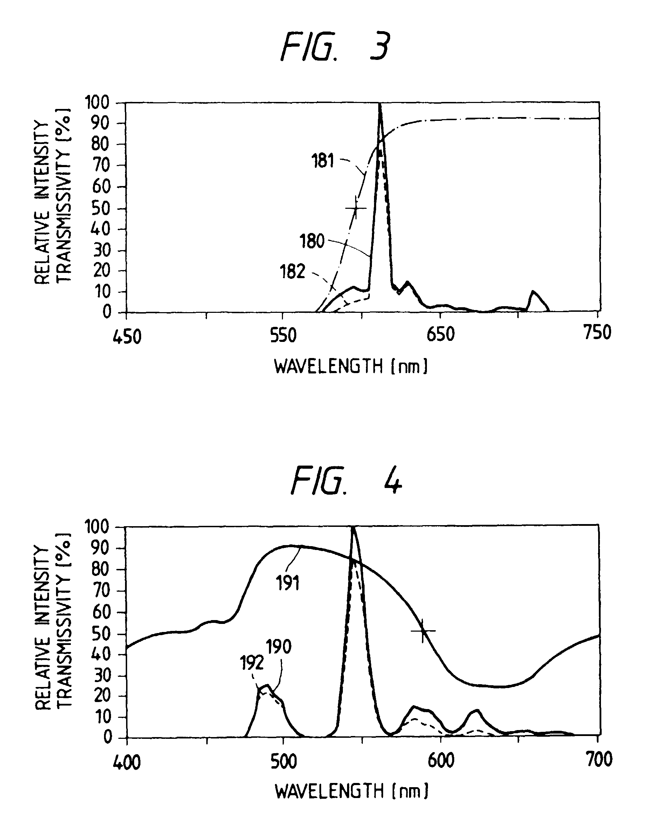

In Fig. 3, the curve 180 denotes the wavelength spectrum of the light emitted from the red CRT 100R. As shown by the curve 180, the spectrum of the red light has a major peak extending at a wavelength of about 620 nm, and a small peak extending in a shorter-wavelength side of the major peak. The small peak lies in a range of wavelengths equal to or shorter than 600 nm. The major peak corresponds to necessary components of the red light. On the other hand, the small peak corresponds to unnecessary components of the red light which would cause the red chromaticity point to deviate from the standard point. As shown by the curve 181 in Fig. 3, the transmissivity (the reciprocal of the absorption coefficient) of the first lens 3 of the red lens unit 110R corresponds to the characteristics of a low pass filter which absorbs the unnecessary components of the red light (the small peak), but which efficiently transmits the necessary components of the red light (the major peak). In Fig. 3, the curve 182 denotes the wavelength spectrum of the red light outputted from the first lens 3 of the red lens unit 110R. As is understood from the comparison between the curves 180 and 182, the unnecessary components of the red light (the small peak) are remarkably damped by the first lens 3 while the necessary components of the red light (the major peak) are efficiently transmitted through the first lens 3.

In the green lens unit 110G, a first lens 3 is composed of a lens additionally having a filtering function while second, third, fourth, and fifth lenses 4, 5, 6, and 7 are composed of non-filtering lenses. Specifically, the first lens 3 is designed so as to have characteristics of a high pass filter in addition to intrinsic lens characteristics. For example, the first lens 3 is composed of a colored plastic lens made of methacrylic resin containing coloring material. Parapet HR-14097L produced by Kuraray Company Limited can be used for the material constituting the first lens 3.

In Fig. 4, the curve 190 denotes the wavelength spectrum of the light emitted from the green CRT 100G. As shown by the curve 190, the spectrum of the green light has a major peak extending at a wavelength of about 550 nm, and two small peaks extending in a longer-wavelength side of the major peak. The small peaks lie in a range of wavelengths equal to or longer than 570 nm. The major peak corresponds to necessary components of the green light. On the other hand, the small peaks correspond to unnecessary components of the green light which would cause the green chromaticity point to deviate from the standard point. As shown by the curve 191 in Fig. 4, the transmissivity of the first lens 3 of the green lens unit 110G corresponds to the characteristics of a high pass filter which absorbs the unnecessary components of the green light (the small peaks) but which efficiently transmits the necessary components of the green light (the major peak). In Fig. 4, the curve 192 denotes the wavelength spectrum of the green light outputted from the first lens 3 of the green lens unit 110G. As is understood from the comparison between the curves 190 and 192, the unnecessary components of the green light (the small peaks) are remarkably damped by the first lens 3 while the necessary components of the green light (the major peak) are efficiently transmitted through the first lens 3.

The embodiment of the invention is similar to the display described with reference to Figure 1 except for the following additional design.

In the green lens unit 110G, the fifth lens 7 is composed of a lens additionally having a filtering function. Specifically, the fifth lens 7 is designed so as to have characteristics of a low pass filter, in addition to its intrinsic lens characteristics. For example, the fifth lens 7 is composed of a coloured plastic lens made of methacrylic resin containing colouring material. Parapet HR-14092L produced by Kuraray Company Limited can be used for the material constituting the fifth lens 7.

As shown by the curve 190 of Fig. 4, the spectrum of the green light has a major peak extending at a wavelength of about 550 nm, and a small peak extending in a shorter-wavelength side of the major peak. The small peak lies in a range of wavelengths equal to or shorter than 520 nm. The major peak corresponds to necessary components of the green light. On the other hand, the small peak corresponds to unnecessary components of the green light which would cause the green chromaticity point to deviate from the standard point. The transmissivity of the fifth lens 7 of the green lens unit 110G corresponds to the characteristics of a low pass filter which absorbs the unnecessary components of the green light (the small peak) but which efficiently transmits the necessary components of the green light (the major peak).

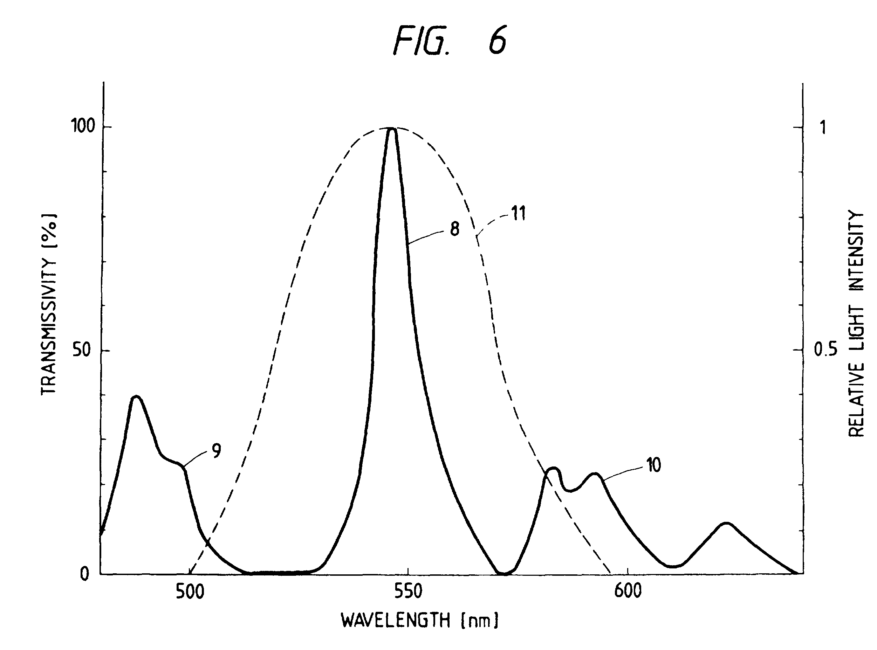

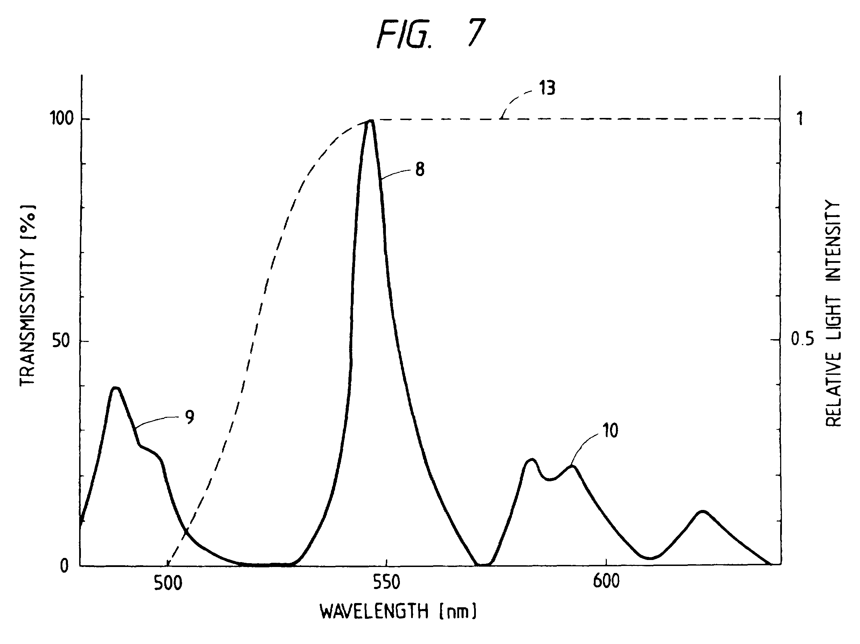

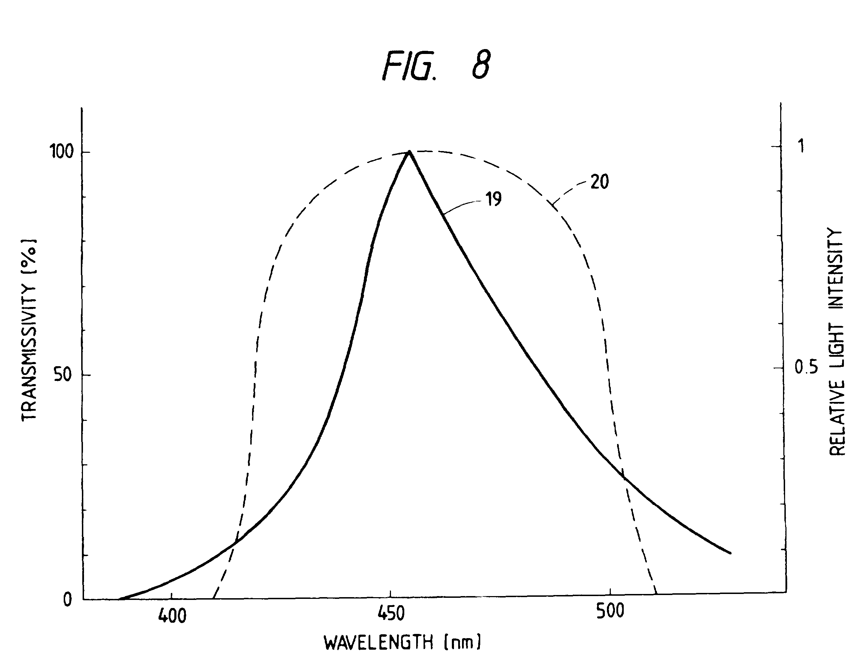

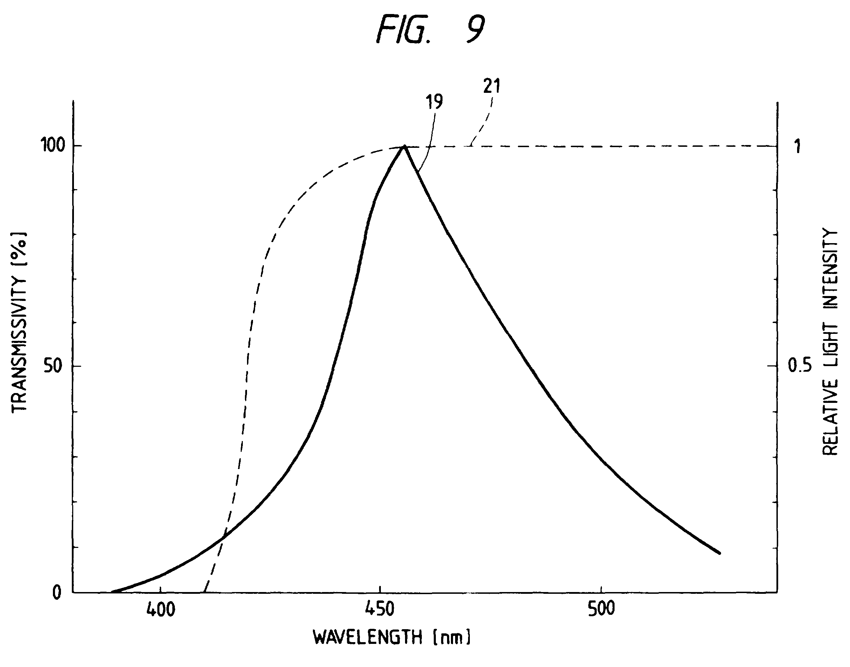

Fig. 6 shows an example of the low-pass filtering characteristics of the fifth lens 7 of the green lens unit 110G. As shown by the solid curves 8-10 in Fig. 6, the spectrum of the green light has a major peak and small peaks. As shown by the broken curve 13 in Fig. 6, the low-pass filtering characteristics of the fifth lens 7 of the green lens unit 110G are designed so that the major peak can be efficiently transmitted but the shorter-wavelength small peak can be adequately absorbed.

Fig. 5 shows a display which is similar to the display shown in Figure 1 except for the following design changes.

As shown in Fig. 5, a red lens unit 110R includes a set of successively-arranged first, second, third, fourth and fifth lenses 3, 4, 5, 6 and 7. The first lens 3 is fitted into an end of a cylindrical housing 31. A glass face plate 1 of a red CRT 100R (see Fig. 1) is fitted into the other end of the cylindrical housing 31. The first lens 3, the cylindrical housing 31, and the CRT face plate 1 define a chamber 33 containing coolant for cooling the light-emitting part of the red CRT 100R. As shown in Fig. 5, the red lens unit 110R includes a cylindrical holder 34 within which the second, third, fourth and fifth lenses 4, 5, 6 and 7 are held.

The internal arrangement of a green lens unit 110G is similar to the internal arrangement of the red lens unit 110R of Fig. 5.

The invention may be applied to the green lens unit of this display.

## Claims

1. A projection-type television display comprising:
means (100R) for generating a red image;
means (100G) for generating a green image;
means (100B) for generating a blue image;
a common screen (120);
a first projection lens unit (110R) for projecting the generated red image onto the screen;
a second projection lens unit (110G) for projecting the generated green image onto the screen; and
a third projection lens unit (110B) for projecting the generated blue image onto the screen; characterised in that said second lens unit comprises first, second, third, fourth and fifth lenses, said first lens (3) being a plastic lens containing a colouring material having a high pass filtering effect such that it transmits light having a wavelength shorter than 570 nm and absorbs light having a wavelength longer than 570 nm, and said fifth lens (7) being a plastic lens containing a colouring material having a low pass filtering effect, such that it transmits light having a wavelength longer than 520 nm and absorbs light having a wavelength shorter than 520 nm.

2. A display according to claim 1 wherein the first projection lens unit (110R) comprises a coloured lens having a predetermined optical filtering effect.

3. A display according to claim 2 wherein the coloured lens of the first projection lens unit has a predetermined low-pass filtering effect transmitting light having a wavelength longer than 600 nm and absorbing light having a wavelength shorter than 600 nm.

4. A display according to any one of the preceding claims wherein the third projection lens unit comprises a coloured lens having a predetermined optical filtering effect.

5. A display according to claim 4 wherein the coloured lens of the third projection lens unit has a predetermined band-pass filtering effect, transmitting light having a wavelength between 420 nm and 500 nm and absorbing light having a wavelength shorter than 420 nm and longer than 500 nm.

6. A display according to any one of the preceding claims further comprising:
at least one housing connected to one of the projection lens units and the face plate of the corresponding means for generating an image, wherein the housing, the projection lens, and the face plate define a chamber containing coolant for cooling the light-emitting means.

## Patentansprüche

1. Projektionsfernsehbildanzeigevorrichtung mit
einer Einrichtung (100R) zur Erzeugung eines roten Bildes,
einer Einrichtung (100G) zur Erzeugung eines grünen Bildes,
einer Einrichtung (100B) zur Erzeugung eines blauen Bildes,
einem gemeinsamen Bildschirm (120),
einer ersten Projektionsobjektiveinheit (110R) zum Projizieren des erzeugten roten Bildes auf dem Bildschirm,
einer zweiten Projektionsobjektiveinheit (110G) zum Projizieren des erzeugten grünen Bildes auf dem Bildschirm und
einer dritten Projektionsobjektiveinheit (110B) zum Projizieren des erzeugten blauen Bildes auf dem Bildschirm,
**dadurch gekennzeichnet, daß**
die zweite Objektiveinheit erste, zweite, dritte, vierte und fünfte Linsen aufweist, wobei die erste Linse (3) eine Kunststofflinse ist, die ein färbendes Material enthält, welches eine derartige Hochpaß-Filterwirkung aufweist, daß sie Licht einer geringeren Wellenlänge als 570 nm durchläßt und Licht einer größeren Wellenlänge als 570 nm absorbiert, und die fünfte Linse (7) eine Kunststofflinse ist, die ein färbendes Material enthält, welches eine derartige Tiefpaß-Filterwirkung aufweist, daß sie Licht einer größeren Wellenlänge als 520 nm durchläßt und Licht einer geringeren Wellenlänge als 520 nm absorbiert.

2. Anzeigevorrichtung nach Anspruch 1,
**dadurch gekennzeichnet, daß**
die erste Projektionsobjektiveinheit (110R) eine gefärbte Linse mit einer vorbestimmten optischen Filterwirkung aufweist.

3. Anzeigevorrichtung nach Anspruch 2,
**dadurch gekennzeichnet, daß**
die farbige Linse der ersten Projektionsobjektiveinheit eine vorbestimmte Tiefpaß-Filterwirkung aufweist, die Licht einer größeren Wellenlänge als 600 nm durchläßt und Licht einer geringeren Wellenlänge als 600 nm absorbiert.

4. Anzeigevorrichtung nach einem der vorangehenden Ansprüche,
**dadurch gekennzeichnet, daß**
die dritte Projektionsobjektiveinheit eine gefärbte Linse mit einer vorbestimmten optischen Filterwirkung aufweist.

5. Anzeigevorrichtung nach Anspruch 4,
**dadurch gekennzeichnet, daß**
die gefärbte Linse der dritten Projektionsobjektiveinheit eine vorbestimmte Bandpaß-Filterwirkung aufweist, die Licht einer Wellenlänge zwischen 420 nm und 500 nm durchläßt und Licht einer geringeren Wellenlänge als 420 nm sowie Licht einer größeren Wellenlänge als 500 nm absorbiert.

6. Anzeigevorrichtung nach einem der vorangehenden Ansprüche,
**gekennzeichnet durch**
zumindest ein an eine der Projektionsobjektiveinheiten sowie die Vorderplatte der entsprechenden Einrichtung zur Erzeugung eines Bildes angeschlossenes Gehäuse, wobei das Gehäuse, das Projektionsobjektiv und die Vorderplatte eine Kammer bestimmen, welche Kühlmittel zur Kühlung der lichtemittierenden Einrichtung enthält.

## Revendications

1. Appareil d'affichage d'image de télévision du type à projection, comprenant :
- un moyen (100R) de production d'une image rouge,
- un moyen (100G) de production d'une image verte,
- un moyen (100B) de production d'une image bleue,
- un écran commun (120),
- une première unité (110R) de lentilles de projection servant à projeter sur l'écran l'image rouge produite,
- une deuxième unité (110G) de lentilles de projection servant à projeter sur l'écran l'image verte produite, et
- une troisième unité (110B) de lentilles de projection servant à projeter sur l'écran l'image bleue produite,
caractérisé en ce que ladite deuxième unité de lentilles comprend des première, deuxième, troisième, quatrième et cinquième lentilles, ladite première lentille (3) étant une lentille en matière plastique qui contient un matériau de coloration ayant un effet de filtrage passe-haut, de sorte qu'elle transmet la lumière ayant une longueur d'onde plus courte que 570 nm et absorbe la lumière ayant une longueur d'onde plus longue que 570 nm, et ladite cinquième lentille (7) étant une lentille en matière plastique qui contient un matériau de coloration ayant un effet de filtrage passe-bas, de sorte qu'elle transmet la lumière ayant une longueur d'onde plus longue que 520 nm et absorbe la lumière ayant une longueur d'onde plus courte que 520 nm.

2. Appareil d'affichage selon la revendication 1, dans lequel la première unité (110R) de lentilles de projection comprend une lentille colorée ayant un effet de filtrage optique prédéterminé.

3. Appareil d'affichage selon la revendication 2, dans lequel la lentille colorée de la première unité de lentilles de projection a un effet de filtrage passe-bas prédéterminé qui transmet la lumière ayant une longueur d'onde plus longue que 600 nm et absorbe la lumière ayant une longueur d'onde plus courte que'600 nm.

4. Appareil d'affichage selon l'une quelconque des précédentes revendications, dans lequel la troisième unité de lentilles de projection comprend une lentille colorée ayant un effet de filtrage optique prédéterminé.

5. Appareil d'affichage selon la revendication 4, dans lequel la lentille colorée de la troisième unité de lentilles de projection a un effet de filtrage passe-bande prédéterminé, qui transmet la lumière ayant une longueur d'onde entre 420 nm et 500 nm et absorbe la lumière ayant une longueur d'onde plus courte que 420 nm ou plus longue que 500 nm.

6. Appareil d'affichage selon l'une quelconque des précédentes revendications, comprenant en outre au moins une enceinte couplée à l'une des unités de lentilles de projection et à la face plate du moyen correspondant servant à produire une image, dans lequel l'enceinte, la lentille de projection et la face plate définissent une chambre qui contient un fluide de refroidissement servant à refroidir le moyen d'émission de lumière.
